# EUROPEAN PATENT APPLICATION

(11) **EP 4 358 168 A1**
(43) Date of publication of application: **24.04.2024**
(21) Application number: 23199350.2
(22) Date of filing: 25.09.2023
(51) Int. Cl.: H01M 4/04

(54) **DOUBLE-SIDED COATING FOR ELECTROCHEMICAL DEVICE APPLICATIONS**

(30) Priority: 23.09.2022 US 202263409350 P
(71) Applicant: II-VI Delaware, Inc., Wilmington, Delaware 19801 (US)
(72) Inventor: Lu, Xinyu, Wexford, 15090 (US); Xu, Wen-Qing, Sarver, 16055 (US); Gao, Zan, Wexford, 15090 (US)
(74) Representative: Forresters IP LLP

(57) **Abstract**

A method of forming a double-sided coating comprises: arranging a first slurry (112, 114) on a first side of a substrate (102) and a second slurry (108, 110) on a second side of the substrate, wherein the first slurry comprises a liquid carrier suspending first solid particles, wherein the first slurry comprises a first binder, a first active material, and a first conductive material, wherein the second slurry comprises a liquid carrier suspending second solid particles, wherein the second slurry comprises a second binder, a second active material, and a second conductive material; contacting at least one first film (118, 122) on the first slurry and at least one second film (116, 120) on the second slurry, wherein at least one of the at least one first film and the at least one second film is porous; and evaporating at least a portion of the liquid carrier of the first slurry and second slurry to form a respective first coating forming a first electrode and second coating forming a second electrode, wherein the first coating and the second coating each have a thickness of at least 30 µm and a surface roughness (Ra) of less than 10 µm.

## Description

### CROSS-REFERENCE TO RELATED APPLICATIONS

This application claims priority to United States Provisional Patent Application No. 63/409,350 filed on September 23, 2022, the disclosure of which is incorporated by reference herein in its entirety.

### BACKGROUND

### 1. Field

This disclosed subject matter relates generally to double-sided coatings, methods of forming double-sided coatings, and electrochemical devices comprising double-sided coatings.

### 2. Technical Considerations

The production of electrochemical devices, such as batteries, capacitors, an electrochemical sensors, fuel cells, and the like can be difficult, including the fabrication of the electrodes thereof. In particular, fabrication of the electrodes using a double-sided, thick coating could not be achieved using existing techniques because the coatings would dry unevenly, resulting in shrinking and/or cracking.

### SUMMARY

Accordingly, it is an object of the presently disclosed subject matter to provide a smooth, thick double-sided coating that overcomes some or all of the deficiencies identified above.

According to non-limiting embodiments or aspects, provided is a double-sided coating including: a substrate having a first side and an opposing second side; a first coating forming a first electrode arranged on the first side; and a second coating forming a second electrode arranged on the second side, where each of the first coating and the second coating have a thickness of at least 30 µm and a surface roughness (Ra) of less than 10 µm and are formed from a slurry including a liquid carrier suspending solid particles, where the slurry includes a binder, an active material, and a conductive material.

In some non-limiting embodiments or aspects, the double-sided coating may further include at least one first film arranged on the first coating and at least one second film arranged on the second coating, where at least one of the at least one first film and the at least one second film may be porous.

In some non-limiting embodiments or aspects, an adhesion between the at least one first film and the first coating may be less than an adhesion between the first coating and the first side of the substrate and/or an adhesion between the at least one second film and the second coating may be less than an adhesion between the second coating and the second side of the substrate.

In some non-limiting embodiments or aspects, the active material may include an electroactive material.

In some non-limiting embodiments or aspects, the conductive material may include conductive carbon.

In some non-limiting embodiments or aspects, the substrate may include a metal mesh and/or a solid foil.

In some non-limiting embodiments or aspects, the substrate may include pores.

In some non-limiting embodiments or aspects, the first electrode and/or the second electrode may include a cathode.

In some non-limiting embodiments or aspects, the first coating and/or the second coating may have a porosity of from 20%-90%.

In some non-limiting embodiments or aspects, the double-sided coating may be arranged as a component of a secondary battery and/or a lithium-Chalcogen battery.

According to non-limiting embodiments or aspects, provided is a method of forming a double-sided coating including: arranging a first slurry on a first side of a substrate and a second slurry on a second side of the substrate, where the first slurry includes a liquid carrier suspending first solid particles, where the first slurry includes a first binder, a first active material, and a first conductive material, where the second slurry includes a liquid carrier suspending second solid particles, where the second slurry includes a second binder, a second active material, and a second conductive material; contacting at least one first film on the first slurry and at least one second film on the second slurry, where at least one of the at least one first film and the at least one second film is porous; and evaporating at least a portion of the liquid carrier of the first slurry and second slurry to form a respective first coating forming a first electrode and second coating forming a second electrode, where the first coating and the second coating each have a thickness of at least 30 µm and a surface roughness (Ra) of less than 10 µm.

In some non-limiting embodiments or aspects, the method may further include removing the at least one first film from the first coating without removing the first coating from the first side of the substrate; and/or removing the at least one second film from the second coating without removing the second coating from the second side of the substrate.

In some non-limiting embodiments or aspects, the evaporating may occur at ambient temperature.

In some non-limiting embodiments or aspects, the first slurry may be applied to the at least one first film; the first side of the substrate may be contacted with the first slurry; the second slurry may be applied to the second side of the substrate; and the at least one second film may be contacted with the second slurry.

In some non-limiting embodiments or aspects, the at least one first film may be porous or non-porous, and the at least one second film may be porous.

In some non-limiting embodiments or aspects, the first and second slurries may be applied to the first and second sides of the substrate, respectively; and the at least one first and second films may be contacted with the first and second slurries, respectively.

In some non-limiting embodiments or aspects, the at least one first film and the at least one second film may be porous.

In some non-limiting embodiments or aspects, an adhesion between the at least one first film and the first coating may be less than an adhesion between the first coating and the first side of the substrate and/or an adhesion between the at least one second film and the second coating may be less than an adhesion between the second coating and the second side of the substrate.

According to non-limiting embodiments or aspects, an electrochemical device includes the double-sided coating described herein.

In some non-limiting embodiments or aspects, the electrochemical device may include a battery, a capacitor, an electrochemical sensor, or a fuel cell.

In some non-limiting embodiments or aspects, the first coating and the second coating may form a first cathode and a second cathode, respectively, of the electrochemical device.

In some non-limiting embodiments or aspects, the electrochemical device may further include: a first separator including a first electrolyte, where a first end of the first separator may be connected to the first cathode; a first anode connected to a second end of the first separator; a second separator including a second electrolyte, where a first end of the second separator may be connected to the second cathode; and a second anode connected to a second end of the second separator.

In some non-limiting embodiments or aspects, the electrochemical device may include a secondary battery and/or a lithium-Chalcogen battery.

Further embodiments or aspects are set forth in the following numbered clauses:
Clause 1: A double-sided coating, comprising: a substrate having a first side and an opposing second side; a first coating forming a first electrode arranged on the first side; and a second coating forming a second electrode arranged on the second side, wherein each of the first coating and the second coating have a thickness of at least 30 µm, such as from 30 µm to 3 mm, from 50 µm to 1 mm, from 70 µm to 500 µm, or from 100 µm to 400 µm, and a surface roughness (Ra) of less than 10 µm, such as less than 1 µm, and are formed from a slurry comprising a liquid carrier suspending solid particles, wherein the slurry comprises comprise a binder, an active material, and a conductive material.
Clause 2: The double-sided coating of clause 1, further comprising at least one first film arranged on the first coating and at least one second film arranged on the second coating, wherein at least one of the at least one first film and the at least one second film is porous.
Clause 3: The double-sided coating of clause 2, wherein an adhesion between the at least one first film and the first coating is less than an adhesion between the first coating and the first side of the substrate and/or an adhesion between the at least one second film and the second coating is less than an adhesion between the second coating and the second side of the substrate.
Clause 4: The double-sided coating of any of clauses 1-3, wherein the active material comprises an electroactive material.
Clause 5: The double-sided coating of any of clauses 1-4, wherein the conductive material comprises conductive carbon.
Clause 6: The double-sided coating of any of clauses 1-5, wherein the substrate comprises a metal mesh and/or a solid foil.
Clause 7: The double-sided coating of any of clauses 1-6, wherein the substrate comprises pores.
Clause 8: The double-sided coating of any of clauses 1-7, wherein the first electrode and/or the second electrode comprises a cathode.
Clause 9: The double-sided coating of any of clauses 1-8, wherein the first coating and/or the second coating has a porosity of from 20%-90%.
Clause 10: The double-sided coating of any of clauses 1-9, arranged as a component of a secondary battery and/or a lithium-Chalcogen battery.
Clause 11: A method of forming a double-sided coating, such as the double-sided coating of any of clauses 1-10, comprising: arranging a first slurry on a first side of a substrate and a second slurry on a second side of the substrate, wherein the first slurry comprises a liquid carrier suspending first solid particles, wherein the first slurry comprises a first binder, a first active material, and a first conductive material, wherein the second slurry comprises a liquid carrier suspending second solid particles, wherein the second slurry comprises a second binder, a second active material, and a second conductive material; contacting at least one first film on the first slurry and at least one second film on the second slurry, wherein at least one of the at least one first film and the at least one second film is porous; and evaporating at least a portion of the liquid carrier of the first slurry and second slurry to form a respective first coating forming a first electrode and second coating forming a second electrode, wherein the first coating and the second coating each have a thickness of at least 30 µm and a surface roughness (Ra) of less than 10 µm.
Clause 12: The method of clause 11, further comprising: removing the at least one first film from the first coating without removing the first coating from the first side of the substrate; and/or removing the at least one second film from the second coating without removing the second coating from the second side of the substrate.
Clause 13: The method of clause 11 or 12, wherein the evaporating occurs at ambient temperature.
Clause 14: The method of any of clauses 11-13, wherein: the first slurry is applied to the at least one first film; the first side of the substrate is contacted with the first slurry; the second slurry is applied to the second side of the substrate; and the at least one second film is contacted with the second slurry.
Clause 15: The method of clause 14, wherein the at least one first film is porous or non-porous, and the at least one second film is porous.
Clause 16: The method of any of clauses 11-15, wherein: the first and second slurries are applied to the first and second sides of the substrate, respectively; and the at least one first and second films are contacted with the first and second slurries, respectively.
Clause 17: The method of any of clauses 11-16, wherein the at least one first film and the at least one second film are porous.
Clause 18: The method of any of clauses 11-17, wherein an adhesion between the at least one first film and the first coating is less than an adhesion between the first coating and the first side of the substrate and/or an adhesion between the at least one second film and the second coating is less than an adhesion between the second coating and the second side of the substrate.
Clause 19: An electrochemical device comprising the double-sided coating of any of clauses 1-10.
Clause 20: The electrochemical device of clause 19, wherein the electrochemical device comprises a battery, a capacitor, an electrochemical sensor, or a fuel cell.
Clause 21: The electrochemical device of clause 19 or 20, wherein the first coating and the second coating form a first cathode and a second cathode, respectively, of the electrochemical device.
Clause 22: The electrochemical device of clause 21, further comprising: a first separator comprising a first electrolyte, wherein a first end of the first separator is connected to the first cathode; a first anode connected to a second end of the first separator; a second separator comprising a second electrolyte, wherein a first end of the second separator is connected to the second cathode; and a second anode connected to a second end of the second separator.
Clause 23: The electrochemical device of any of clauses 19-22, wherein the electrochemical device comprises a secondary battery and/or a lithium-Chalcogen battery.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter. As used in the specification and the claims, the singular forms of "a," "an," and "the" include plural referents unless the context clearly dictates otherwise.

### BRIEF DESCRIPTION OF THE DRAWINGS

Additional advantages and details of the disclosed subject matter are explained in greater detail below with reference to the exemplary embodiments or aspects that are illustrated in the accompanying figures, in which:
FIG. 1A-1C are cross-sectional views of double-sided coatings, according to some non-limiting embodiments or aspects of the presently disclosed subject matter;
FIG. 2A-2B are cross-sectional views of electrochemical devices including double-sided coatings, according to some non-limiting embodiments or aspects of the presently disclosed subject matter;
FIG. 3A-3B are schematic views of systems for preparing double-sided coatings having a non-porous substrate and a porous film, according to some non-limiting embodiments or aspects of the presently disclosed subject matter; and
FIG. 4A-4C are schematic views of systems for preparing double-sided coatings having a two porous films, according to some non-limiting embodiments or aspects of the presently disclosed subject matter.

### DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

Non-limiting embodiments or aspects of the disclosed subject matter are directed to a double-sided coating comprising: a substrate having a first side and an opposing second side; a first coating forming a first electrode arranged on the first side; and a second coating forming a second electrode arranged on the second side, wherein each of the first coating and the second coating have a thickness of at least 30 µm and a surface roughness (Ra) of less than 10 µm and are formed from a slurry comprising a liquid carrier suspending solid particles, wherein the slurry comprises a binder, an active material, and a conductive material.

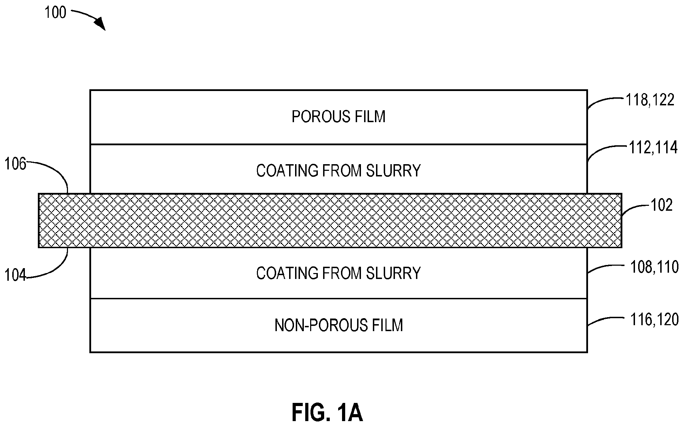

Referring to FIGS. 1A-1C, double-sided coatings 100 are shown according to some non-limiting embodiments or aspects. The double-sided coating 100 may comprise a mesh substrate 102 having a first side 104 and an opposing second side 106. The mesh substrate 102 may comprise a porous, mesh material. For example, the mesh substrate 102 may comprise a metal mesh, a polymeric mesh, or some combination thereof. The mesh substrate 102 may comprise a woven wire mesh, an expanded foil, a perforated foil, or some combination thereof. The mesh substrate 102 may comprise aluminum, stainless steel, copper, carbon cloth, and/or the like.

The mesh substrate 102 may comprise a mesh size of up to 1000 µm, such as up to 800 µm, up to 600 µm, up to 400 µm, or up to 200 µm, as determined according to ASTM E-11. The mesh substrate 102 may comprise a mesh size of at least 100 µm, such as at least 200 µm, at least 400 µm, at least 600 µm. The mesh substrate 102 may comprise a mesh size of from 100-1000 µm, such as from 200-800 µm, or from 200-400 µm.

The mesh substrate 102 may function as a current collector and support the first electrode and second electrode.

The pores of the mesh substrate 102 may allow for evaporation of solvent from the slurries described hereinafter so as to enable formation of the first coating and second coating. The pores of the mesh substrate 102 may also alleviate pressure on the slurries as the slurries dry to form the first coating and second coating, thus reducing damage (e.g., shrinking, cracking, and the like) to the first coating and second coating.

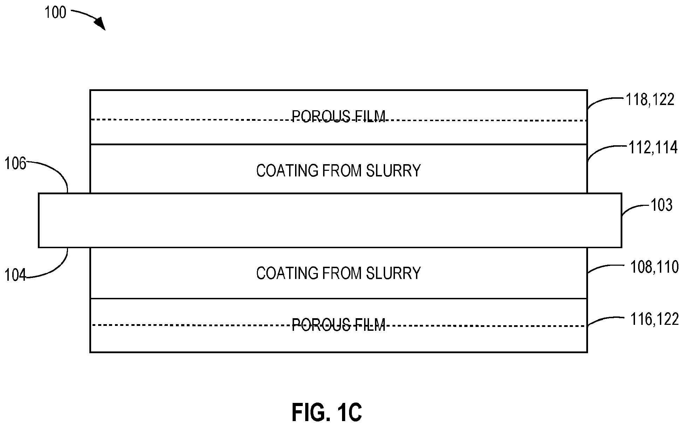

Referring to FIG. 1C, in some alternative embodiments or aspects, a solid substrate 103 (non-porous, non-mesh substrate) may be substituted for the mesh substrate 102 (from FIGS 1A-1C), such as a solid metal foil and/or solid plastic substrate. The solid substrate 103 may comprise a coating, such as a carbon-containing coating to enhance adhesion between the solid substrate 103 and the first coating and second coating. For example, the solid substrate 103 may be a coated foil coated with a water soluble or non-water soluble carbon coating. In such embodiments, the first film and second film (described hereinafter) may both be porous so as to enable evaporation of solvent from the slurries described hereinafter so as to enable formation of the first coating and second coating.

With continued reference to FIGS. 1A-1C, a first slurry may contact the first side 104 of the mesh substrate 102 which, once dried, forms a first coating 108 on the first side 104. The first coating 108 may function as a first electrode 110.

The first slurry may comprise a liquid carrier suspending solid particles. The slurry may comprise moist particle and/or a paste. The slurry may comprise a binder, an active material, and/or a conductive material. The binder may comprise solid particles or may form a solution with the liquid carrier. The active material and/or the conductive material may comprise solid particles suspended in the liquid carrier.

The liquid carrier may comprise a solvent. The solvent may comprise an organic solvent, water, or some combination thereof. The slurry being an aqueous dispersion refers to a slurry in which at least 50% by weight of the solvent in the slurry is water. The slurry being an organic solvent dispersion refers to a slurry in which more than 50% by weight of the solvent in the slurry is an organic solvent. The organic solvent used in the slurry may comprise an organic carbonate compound, an ether, an alcohol, an amide (e.g., n-methyl-2-pyrrolidone (NMP)), an ester, a hydrocarbon, a halogenated hydrocarbon, a lithium containing-solvent, and the like. etc. The slurry may be an aqueous dispersion or an organic solvent dispersion.

The liquid carrier may comprise from 1-99 % by weight of the slurry, such from 10-97 % by weight, from 20-95 % by weight, from 30-93 % by weight, or from 40-90 % by weight. The liquid carrier may comprise of at least 1 % by weight of the slurry, such as at least 10% by weight, at least 20 % by weight, at least 30 % by weight, at least 40 % by weight, at least 50 % by weight, at least 60 % by weight at least 70 % by weight, at least 80 % by weight, or at least 90 % by weight. The liquid carrier may comprise up to 99 % by weight of the slurry, such as up to 95% by weight, or up to 90 % by weight.

The slurry may comprise a solids content from 1-99 % by weight of the slurry, such as from 3-90 % by weight, from 5-80 % by weight, from 7-70 % by weight, from 10-60 % by weight, or from 10-30 % by weight. The slurry may comprise a solids content of at least 1% by weight of the slurry, such as at least 3 % by weight, at least 5 % by weight, at least 7 % by weight, or at least 10 % by weight. The slurry may comprise a solids content of up to 99% by weight of the slurry, such as up to 95 % by weight, up to 80 % by weight, up to 70 % by weight, up to 60 % by weight, or up to 30 % by weight.

The binder may comprise a polymeric material. Non-limiting examples of suitable polymeric materials include carboxy methyl cellulose (CMC), polyvinylidene fluoride (PVDF), polytetrafluoroethylene (PTFE), styrene-butadiene rubber (SBR), polyethylene glycol dimethyl ether (PEGDME), conductive polymer(s) (such as poly(3,4-ethylenedioxythiophene) (PEDOT)), polyacrylic acid (PAA), polyethylenimine (PEI), a latex polymer, an acrylate, a polyurethane, a polyurethane acrylate, and the like.

In some non-limiting examples, the slurry may comprise an organic solvent dispersion, and the polymeric material may comprise PVDF, PTFE, PEI or some combination thereof. In some non-limiting examples, the slurry may comprise an aqueous solvent dispersion, and the polymeric material may comprise CMC, a water-based latex, SBR, or some combination thereof.

The binder may comprise from 5-50 % by weight of the slurry based on total solids of the slurry, such as from 10-40 % by weight, from 10-30 % by weight, or from 10-20 % by weight. The binder may comprise at least 5% by weight of the slurry based on total solids of the slurry, such as at least 10% by weight. The binder may comprise up to 50% by weight of the slurry based on total solids of the slurry, such as up to 40 % by weight, up to 30 % by weight, or up to 20 % by weight.

The active material of the solid particles may comprise an electroactive material to store energy. An electroactive material may be defined as a material (e.g. an element or compound) that participates in an electrochemical reaction during a battery cycling process and/or a material that is capable of holding a charge (e.g., for a capacitor). Non-limiting examples of electroactive materials for a lithium-Chalcogen battery comprise cathodic material comprising a Chalcogen compound or element (e.g., sulfur) and anodic material comprising lithium. Non-limiting examples of electroactive materials for a lithium-ion battery comprise cathodic material comprising lithium cobalt oxide, lithium manganese oxide, lithium nickel manganese cobalt oxide, lithium iron phosphate, lithium titanate, or some combination thereof and anodic material comprising graphite, silicon, or some combination thereof.

In some non-limiting embodiments or aspects, the electroactive material for the lithium-Chalcogen battery may comprise a carbon/sulfur composite material comprising both carbon and sulfur. The sulfur content of the carbon/sulfur composite material may comprise at least 5 % by weight of the carbon/sulfur composite material, such as at least 10 % by weight, at least 20 % by weight, at least 30 % by weight, at least 40 % by weight, or at least 50 % by weight. The carbon/sulfur composite material may comprise a carbonaceous material that hosts sulfur.

For a lithium-Chalcogen battery, the active material (e.g., the carbon/sulfur composite material) may comprise from 5-90 % by weight of the slurry based on total solids of the slurry, such as from 10-80 % by weight, or from 20-70 % by weight. The active material may comprise at least 10% by weight of the slurry based on total solids of the slurry, such as at least 20 % by weight, at least 30 % by weight, at least 50 % by weight, at least 70 % by weight, or at least 80 % by weight. The active material may comprise up to 90 % by weight of the slurry based on total solids of the slurry, such as up to 80 % by weight, or up to 70 % by weight.

For a lithium-ion battery, the active material may comprise from 50-99.5 % by weight of the slurry based on total solids of the slurry. The active material may comprise at least 50 % by weight of the slurry based on total solids of the slurry. The active material may comprise up to 99.5 % by weight of the slurry based on total solids of the slurry.

The conductive material of the solid particles may comprise conductive particles. The conductive particles may comprise any conductive materials. For example, the conductive materials may comprise conductive carbon particles, conductive metal particles, or some combination thereof.

The conductive material may comprise from 1-50 % by weight of the slurry based on total solids of the slurry, such as from 2-40 % by weight, from 3-30 % by weight, or from 5-20 % by weight. The conductive material may comprise at least 1 % by weight of the slurry based on total solids of the slurry, such as at least 5 % by weight. The conductive material may comprise up to 50 % by weight of the slurry based on total solids of the slurry, such as up to 40 % by weight, up to 30 % by weight, or up to 20 % by weight. It is noted that carbon from the carbon/sulfur composite of the electroactive material is not considered when determining the amount of the conductive material.

With continued reference to FIGS. 1A-1C, the first slurry may contact the first side 104 of the mesh substrate 102, and drying of the first slurry forms the first coating 108. The first coating 108 may function as the first electrode 110, such as an anode and/or a cathode. In some non-limiting examples, the first electrode 110 may be configured to function as a cathode.

The first coating 108 may be a thick coating. The first coating 108 may have a thickness of at least 30 µm, such as at least 50 µm, at least 70 µm, or at least 100 µm. The first coating 108 may have a thickness of up to 3 mm, such as up to 1 mm, or up to 400 µm. The first coating 108 may have a thickness of from 30 µm to 3 mm, from 50 µm to 1 mm, from 70 µm to 500 µm, or from 100 µm to 400 µm.

The first coating 108 may be a smooth coating. The first coating may have a surface roughness (Ra) of less than 10 µm, such as less than 1 µm, as determined using a ZYGO NewView 600 interferometer.

The first coating may have a porosity of from 20% to 90%, such as 30% to 70%, calculated based on the weight, thickness, and surface area of the first coating. The porosity may be controlled to a predetermined range by a calendaring process.

The first coating 108 may have a total areal density of at least 4 mg/cm², such as at least 5 mg/cm², or at least 7 mg/cm², determined by measuring the coating weight and surface area of the coating. The first coating 108 may have a total areal density of up to up to 200 mg/cm², such as up to 100 mg/cm², up to 50 mg/cm², or up to 30 mg/cm². The first coating 108 may have a total areal density of from 4 to 200 mg/cm², such as from 5 to 50 mg/cm² or from 7 to 30 mg/cm².

With continued reference to FIGS. 1A-1C, a second slurry may be applied to the second side 106 of the mesh substrate 102, and drying of the second slurry forms the second coating 112. The second coating 112 may function as the second electrode 114, such as an anode and/or a cathode. In some non-limiting examples, the second electrode 114 may be configured to function as a cathode. In some non-limiting embodiments in which the substrate is porous, the second electrode 114 and the first electrode 110 may be the same electrode due the electrical connection between the second electrode 114 and the first electrode 110.

The second slurry and the second coating 112 may have the same characteristics as the first slurry and first coating 108 as previously described. For example, the second slurry may comprise the same liquid carrier suspending solid particles as the first slurry. Alternatively, the second slurry may include a different liquid carrier and/or solid particles compared to the first slurry. For example, the second slurry may include at least one different solvent material, binder, active material, and/or conductive material compared to the first slurry.

The second slurry may be applied to the second side 106 of the mesh substrate 102 and dried to form the second coating 112. The second coating 112 may also be a thick, smooth coating having the same range of thicknesses and smoothness as described in connection with the first coating 108. The second coating 112 may also have the same range of sulfur and/or total areal densities and porosities as the first coating 108.

With continued reference to FIGS. 1A-1C, the double-sided coating 100 may comprise a first film 116 arranged on the first coating 108. The first film 116 may be arranged on the opposite side of the first coating 108 compared to the side of the first coating 108 in contact with the first side 104 of the mesh substrate 102. Further, the double-sided coating 100 may comprise a second film 118 arranged on the second coating 112. The second film 118 may be arranged on the opposite side of the second coating 112 compared to the side of the second coating 112 in contact with the second side 106 of the mesh substrate 102.

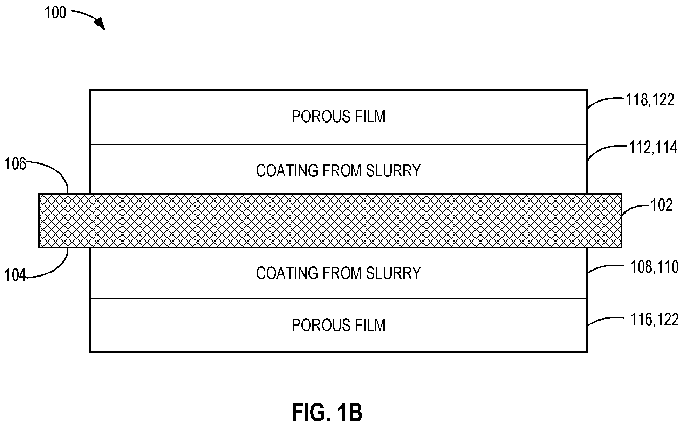

At least one of the first film 116 and the second film 118 may be porous. For example, as shown in FIG. 1A, the first film 116 may be a non-porous film 120, while the second film 118 may be a porous film 122. For example, as shown in FIG. 1B, both the first film 116 and the second film 118 may be porous films 122. At least one of the first film 116 and the second film 118 may be porous to enable removal (e.g., via evaporation) of the solvent from the slurries during drying so that the first slurry and second slurry form the first coating 108 and second coating 112 as described herein.

Non-limiting examples of non-porous films 120 may include non-porous plastic or metallic films. For example, the non-porous film 120 may comprise a non-porous polyethylene terephthalate (PET), polyethylene, polypropylene, polyolefin, poly(vinyl chloride) (PVC), or some combination thereof.

Non-limiting examples of porous films 122 may include a porous polypropylene or polyethylene battery separator, polytetrafluoroethylene (PTFE), nylon, polysulfone, woven or non-woven cloth, or some combination thereof.

With continued reference to FIGS. 1A-1C, a function of the first film 116 and the second film 118 may be to form a smooth first coating 108 and second coating 112 (at the boundary between the films and slurries/coatings), such that the first film 116 and the second film 118 may have the same smoothness characteristics as described in connection with the first coating 108 and second coating 112. Further, a function of porous films 122 of the first film 116 and the second film 118 may be to enable solvent from the slurry to evaporate so as to form the first coating 108 and second coating 112. The presence of the first film 116 and the second film 118 (at least one of which is porous) may allow for more uniform drying of the first coating 108 and second coating 112 (compared to coatings that are not covered by films) to avoid or reduce damage or imperfections (e.g., shrinking, cracking, or the like) in the first coating 108 and second coating 112 during drying, and enable thicker coatings to be formed that are still smooth (e.g., because of the avoided or reduced damage or imperfections).

In some non-limiting embodiments or aspects, the first film 116 and/or the second film 118 may be removable from the first coating 108 and/or the second coating 112 (e.g., after the formation of the first coating 108 and/or second coating 112 from the first slurry and/or second slurry). The first film 116 and/or the second film 118 may be removed from the first coating 108 and/or the second coating 112 without visible damage thereto. The first film 116 and/or the second film 118 may be removed from the first coating 108 and/or the second coating 112 without removing more than trace amounts of the first coating 108 and/or the second coating 112. The first film 116 and/or the second film 118 may be removed from the first coating 108 and/or the second coating 112 by peeling. Upon removal of the first film 116 and/or the second film 118, at least 80% of the surface of the first coating 108 and/or second coating 112 may remain based on surface area of the surface of the coating, such as at least 90%, at least 95%, or 100%.

The first film 116 and/or the second film 118 may be removable from the first coating 108 and/or the second coating 112 because an adhesion between the first film 116 and the first coating 108 may be less than an adhesion between the first coating 112 and the first side 104 of the mesh substrate 102 and/or an adhesion between the second film 118 and the second coating 112 may be less than an adhesion between the second coating 112 and the second side 106 of the mesh substrate 102.

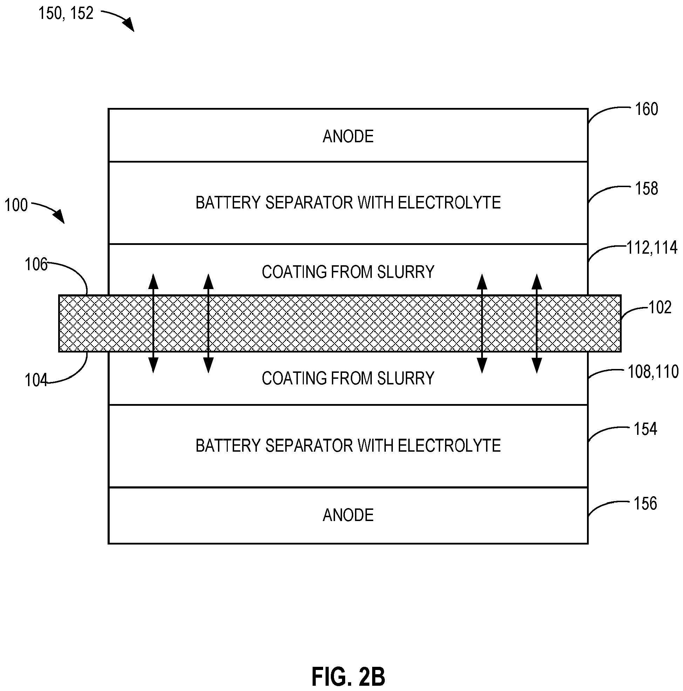

In some alternative embodiments or aspects, the first film 116 and/or the second film 118 may not be removed from the first coating 108 and/or the second coating 112, and the continued presence of the first film 116 and/or the second film 118 may not negatively affect the performance of the double-sided coating 100 when the double-sided coating 100 is included in an electrochemical device. For example, in the embodiments in which the first film 116 and/or the second film 118 are a battery separator (such as a polyethylene or polypropylene battery separator), the first film 116 and/or the second film 118 may not be removed. Referring to FIG. 2B, the battery separators 154, 158 may be the same as the first film 116 and/or the second film 118 from, for example, FIG. 1B.

In some non-limiting embodiments or aspects, a plurality of first films 116 and/or a plurality of second films 118 may be included as a stack of first films 116 and/or a stack of second films 118 (see *e.g.,* FIG. 1C). For example, two or more first films 116 may be arranged in direct contact with one another and over the first coating 108. For example, two or more second films 118 may be arranged in direct contact with one another and over the second coating 112.

Including a single first film 116 and/or second film 118 or including plurality of first films 116 and/or a plurality of second films 118 in this manner may relieve at least some tension from substrate 102, 103, thus reducing and/or avoiding the risk of tearing the substrate 102, 103. Due to relatively high slurry loading in the double-sided coating 100, the substrate 102, 103 may be at a relatively increased risk of tearing, such that the inclusion of a plurality of a separate first films 116 and/or second films may be beneficial to the design of the double-sided coating 100.

With continued reference to FIGS. 1A-1C, the double-sided coating 100 may be included as a component of an electrochemical device. For example, the electrochemical device may comprise a battery, a capacitor, an electrochemical sensor, a fuel cell, or some combination thereof. The electrochemical device comprising the double-sided coating 100 may comprise a secondary (rechargeable) battery. The electrochemical device comprising the double-sided coating 100 may comprise a lithium-Chalcogen battery, such as a lithium-sulfur battery. As used herein, Chalcogen refers to an element in group 16 of the periodic table of elements (e.g., oxygen (O), sulfur (S), selenium (Se), tellurium (Te), polonium (Po), and livermorium (Lv)). In the lithium-sulfur battery, a lithium material may be the anodic material, while the sulfur material may be the cathodic material.

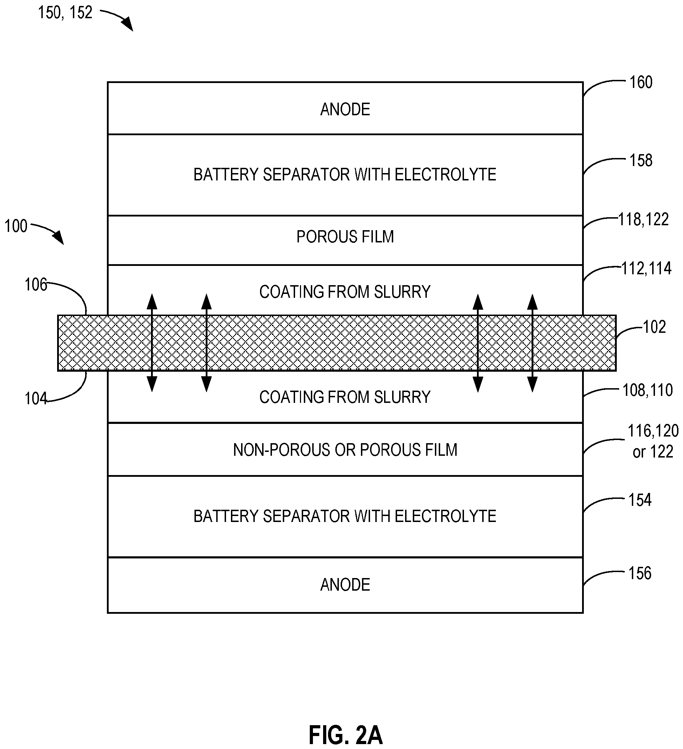

Referring to FIGS. 2A-2B, electrochemical devices 150 including double-sided coatings 100 as described herein are shown according to non-limiting embodiments or aspects. The electrochemical device 150 may comprise a battery 152, as shown. The electrochemical device 150 may comprise a capacitor, an electrochemical sensor, a fuel cell, or an electrochemical sensor. The electrochemical device 150 comprising the double-sided coating 100 may comprise a secondary (rechargeable) battery. The electrochemical device 150 comprising the double-sided coating 100 may comprise a lithium-Chalcogen battery, such as a lithium-sulfur battery. In the lithium-sulfur battery, a lithium material (electroactive material) may form the anodic material, while the sulfur material (electroactive material) may form the cathodic material.

With continued reference to FIGS. 2A-2B, the electrochemical device 150 may comprise the double-sided coating 100 as described in connection with FIGS. 1A-1C of the present disclosure. In FIG. 2A, the first film 116 and second film 118 may have not been removed, in embodiments in which their presence does not negatively affect performance of the electrochemical device. In FIG. 2B, the first film 116 and second film 118 may have been removed or the first film 116 and second film 118 may be used as a battery separator 154, 158. The first coating 108 may form the first electrode 110 (e.g., first cathode) of the electrochemical device 150, while the second coating 112 may form the second electrode 114 (e.g., second cathode) of the electrochemical device 150. The first electrode 110 and the second electrode 112 may be cathodes of the electrochemical device 150.

The electrochemical device 150 may comprise a first battery separator 154 connected (e.g., electrically and/or mechanically) to the side of the first coating 108 (e.g., first electrode 110) opposite the side of the first coating 108 contacting the first side 104 of the mesh substrate 102 (or a solid substrate 103). The electrochemical device 150 may comprise a second battery separator 158 connected to the side of the second coating 112 (e.g., second electrode 114) opposite the side of the second coating 112 contacting the second side 106 of the mesh substrate 102. The use of a mesh substrate 102 may provide the advantage of maintaining flexibility of the substrate even with a thick coating thereon, thus allowing for roll-to-roll operations.

Each of the first battery separator 154 and the second battery separator 158 may comprise an electrolyte. The electrolyte may be a liquid, solid, or gel material. The electrolyte may be a liquid. The electrolyte may be a solid material and may function as the battery separator and electrolyte. The electrolyte may be positioned between the anodes 156, 160 and the first and second coatings 108, 112 (e.g., cathodes), respectively. The electrolyte may wet or soak the electrodes.

The electrolyte disclosed herein may include at least one of LiBF₄, LiC₂F₆NO₄S₂, LiNS₂O₄F₂, LiBOB, LiPO₂F₂, LiPF₆, ether, carbonate, or some combination thereof. The electrolyte may be a standard electrolyte used in coin cell batteries, such as disclosed in U.S. Patent No. 11,114,696 which is incorporated herein by reference in its entirety.

With continued reference to FIGS. 2A-2B, the electrochemical device 150 may comprise a first anode 156 comprising an anodic material configured to co-act with the first electrode 110 (e.g., a cathode) so that the electrochemical device 150 may function as a battery, capacitor, electrochemical sensor, fuel cell, or the like. The first anode 156 may be connected to the end of the first battery separator 154 opposite the first coating 108. The electrochemical device 150 may comprise a second anode 160 comprising an anodic material configured to co-act with the second electrode 114 (e.g., a cathode) so that the electrochemical device 150 may function as a battery, capacitor, electrochemical sensor, fuel cell, or the like. The second anode 160 may be connected to the end of the second battery separator 158 opposite the second coating 112. In some non-limiting embodiments, the electrochemical device 150 may have a plurality of cathodes (e.g., the first and second electrode 110, 114), while having a single anode 156.

While FIGS. 2A-2B show electrochemical devices 150 having the first coating 108 and second coating 112 as cathodes and further including the first anode 156 and second anode 160, it will be appreciated that the first coating 108 and second coating 112 may be prepared as anodes, such that the first anode 156 and second anode 160 may instead be prepared as cathodes.

With continued reference to FIGS. 2A-2B, the electrochemical devices 150 may comprise the first coating 108 and second coating 112 configured as the first electrode 110 and second electrode 114, which are separated by the mesh substrate 102 (or solid substrate 103). However, the mesh substrate may be porous and/or metallic such that its presence allows the material from the first coating 108 to co-act with the second anode 160 and/or the material from the second coating 112 to co-act with the first anode 156 as needed.

The anodes disclosed herein may include at least one of: at least one of element from group IVA (e.g., C, Si, Sn), at least one element from group IIIA (e.g., Al), at least one transition metal from group IB-VIIIB (e.g., Zn, Cd, Ag), at least one alkaline earth metal from group IIA (e.g., Mg, Ca), at least one alkali metal from group IA (e.g., Li, Na, K), at least one compound (e.g., LiₓSi_{y}, LiₓGe_{y}, LiAl, LiₓSn_{y}, LTO, NiO, SiOₓ), or some combination thereof.

The cathodes disclosed herein may further include at least one of: at least one material including a chalcogen element (e.g., S, Se, O, and Te), fluoride, at least one intercalated cathode material (e.g., LiCoO₂, LiMnO₂, LiNiO₂, LiCoₓNi_{y}Mn_{1-x-y}O₂), and LiFePO₄ that may include various dopants such as Ni, Mg, Al, Cr, Zn, Ti, Fe, Co, Ni, Cu, Nd, and La, at least one supercapacitor material (e.g., metal oxides/hydroxides), conductive polymers, or some combination thereof.

The present disclosure is also directed to a method of forming a double-sided coating.

Referring again to FIGS. 1A-1C, the method may comprise arranging the first slurry on the first side 104 of the mesh substrate 102 and the second slurry on the second side 106 of the mesh substrate 102. The method may further comprise contacting the first film 116 on the first slurry and the second film 118 on the second slurry, with at least one of the first film 116 and second film 118 being porous. The method may further comprise evaporating at least a portion of the liquid carrier of the first slurry and second slurry to form the respective first coating 108 forming the first electrode 110 and the second coating 112 forming the second electrode 114. The thickness and smoothness of the formed first coating 108 and second coating 112 may be as specified in this disclosure.

The evaporating of the liquid carrier may be conducted at ambient temperature (e.g., 20-25°C). The evaporating of the liquid carrier may be conducted at elevated temperature (relative to ambient temperature), such as using an oven to heat the double-sided coating 100. The oven temperature may range from 60°C-70C. The oven temperature may be maintained at a low enough temperature to avoid degrading the other components of the double-sided coating 100.

The method may further comprise removing the first film 116 from the first coating 108 without removing the first coating 108 from the first side 104 of the mesh substrate 102 and/or removing the second film 118 from the second coating 112 without removing the second coating 112 from the second side 106 of the mesh substrate 102. Removal of the films 116, 118 from the coatings 108, 112 may comprise peeling the films 116, 118 from the coatings 108, 112.

Referring to FIG. 1A, a method of forming the double-sided coating 100 in which the first film 116 is the non-porous film 120 and the second film 118 is the porous film 122 may include applying the first slurry to the first film 116 (non-porous film 120). The method may include contacting the first side 104 of the mesh substrate 102 with the first slurry. The second slurry may be applied to the second side 106 of the mesh substrate 102. The second film 118 (porous film 122) may be contacted with second slurry. In this non-limiting embodiment, the non-porous, first film 116, 120 may prevent escape of the solvent material of the slurries therethrough; however, the porous, second film 118, 122 may allow for evaporation of the solvent material of the slurries therethrough. In this non-limiting embodiment, the films 116, 118 and mesh substrate 102 may be arranged horizontally to receive and/or contact the slurries during fabrication of the double-sided coating 100 as described.

Referring to FIG. 1B, a method of forming the double-sided coating 100 in which the first film 116 and second film 118 are both porous films 122 may include applying (e.g., simultaneously) the first and second slurries to the first and second sides 104, 106, respectively, of the mesh substrate 102. The first and second films 116, 118 may be contacted with the first and second slurries, respectively. In this non-limiting embodiment, the porous, first and second films 116, 118 allow for evaporation of the solvent material of the slurries therethrough. Due to the porous nature of both the first and second films 116, 118, the films 116, 118 and mesh substrate 102 may be arranged vertically to receive and/or contact the slurries during fabrication of the double-sided coating 100.

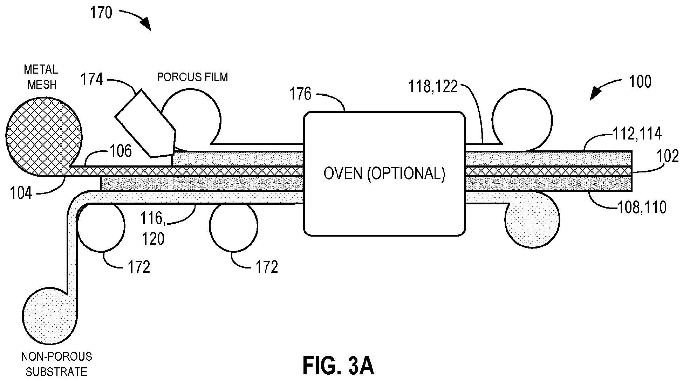

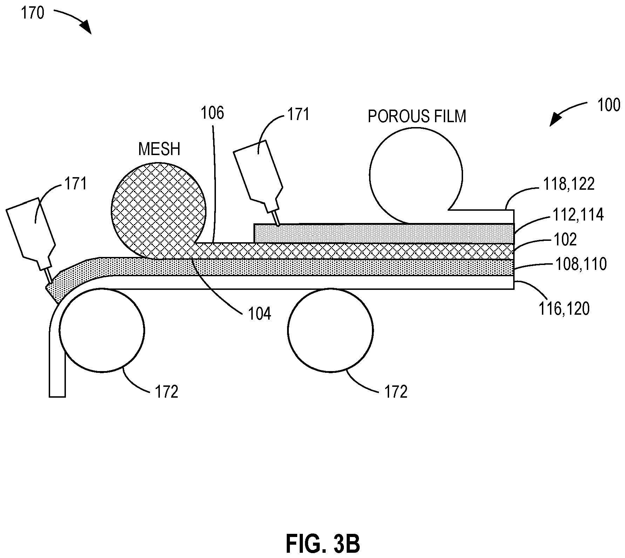

Referring to FIGS. 3A-3B, systems 170 for preparing double-sided coatings 100 having a non-porous film 120 and a porous film 122 are shown according to some non-limiting embodiments or aspects. The systems 170 shows preparing the double-sided coatings 100 using a doctor blading technique (FIG. 3A) and a slot die technique (FIG. 3B). The system 170 may comprise rollers 172 on which the layers of the double-sided coating 100 may be arranged and/or transported. The system 170 may further comprise applicators 171 (e.g. slot die applicators) for applying the slurries and/or arranging the slurries in the double-sided coating 100. The system 170 may further comprise doctor blades 174 to spread the slurries over the substrate to which they are applied (e.g., the mesh substrate 102). The system 170 may comprise an oven 176 for heating of the double-sided coating 100 to evaporate solvent from the slurry.

Referring to FIG. 3A, the non-porous, first film 116, 120 may be arranged over the rollers 172. The first slurry may be applied to form the first coating 108 arranged over the non-porous first film 116, 120. The first side 104 of the mesh substrate 102 may be arranged over the first coating 108. The second slurry may be applied over the second side 106 of the mesh substrate 102 to form the second coating 112. The porous, second film 118, 122 may be arranged over the second coating 112. At least one doctor blade 174 may be used to apply to the slurries to select the thickness of the first coating 108 and second coating 112. The rollers 172 may move the components through the oven 176 to evaporate the solvent from the slurries to form the first coating 108 and second coating 112. Alternatively, the solvent may be evaporated without the oven 176 at ambient temperatures.

Referring to FIG. 3B, the non-porous, first film 116, 120 may be arranged over the rollers 172. The first slurry may be applied using a slot die applicator 171 to form the first coating 108 arranged over the non-porous first film 116, 120. The first side 104 of the mesh substrate 102 may be arranged over the first coating 108. The second slurry may be applied using the slot die applicator 171 over the second side 106 of the mesh substrate 102 to form the second coating 112. The porous, second film 118, 122 may be arranged over the second coating 112.

While the systems 170 show preparation of double-sided coatings 100 using a doctor blade technique (FIG. 3A) or slot die technique (FIG. 3B), it will be appreciated that other techniques may be employed to apply the slurries, such as dip coating, spin coating, bar coating, roll casting, film casting, printing, spraying, extrusion, electrochemical deposition, roll coating, extrusion coating, curtain coating, or any combination thereof.

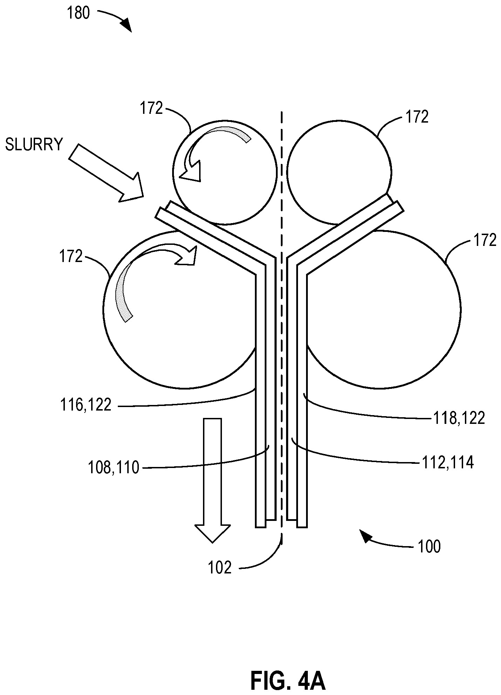

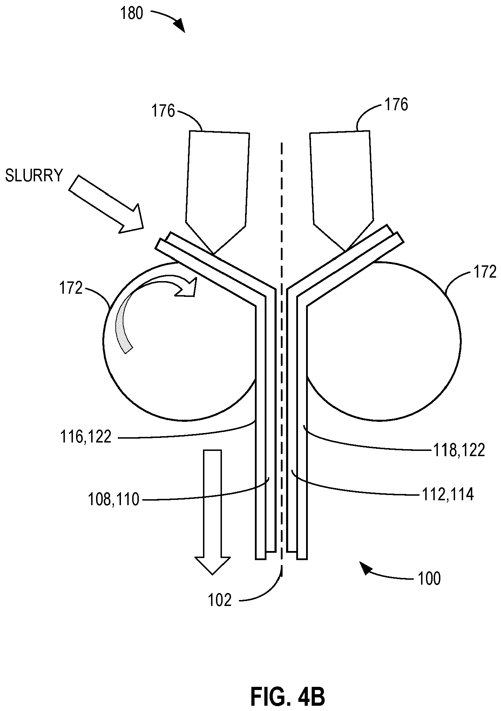

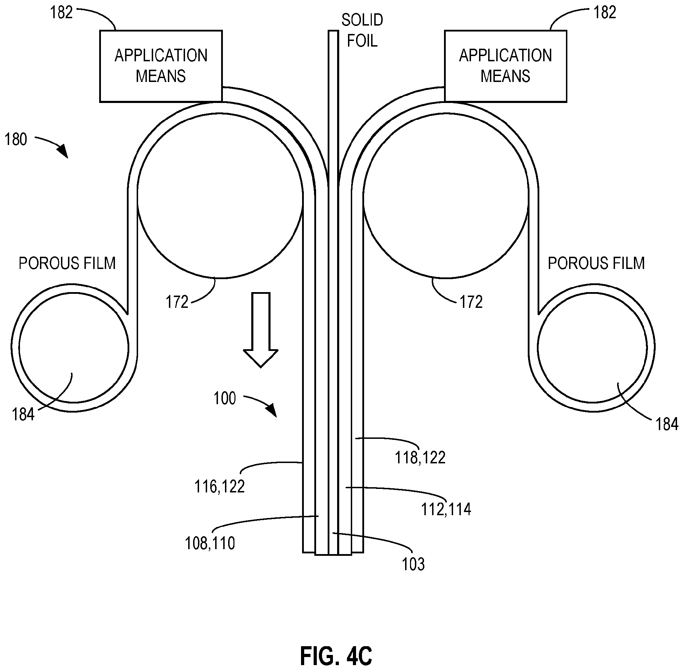

Referring to FIG. 4A-4C, systems 180 for preparing double-sided coatings 100 having two porous films 122 are shown according to some non-limiting embodiments or aspects. FIG. 4A shows the system 180 employing a reverse roll coating technique, while FIG. 4B shows the system 180 employing a blade 176 over roll coater. FIG. 4C shows a genericized system 180 employing a genericized application means 182. However, it will be appreciated that other techniques may be employed to apply the slurries, such as any technique previously disclosed herein.

In the reverse roll coating technique of FIG. 4A, the porous films 122 may be vertically arranged, and the slurries may be applied between the roller 172 and the corresponding porous film 122 to apply the slurries to the porous films 122. The opposing side of the slurries may be contacted to the mesh substrate 102 to form the double-sided coating 100. The solvent from the slurries may be evaporated through the porous films 122.

In the knife over roll coater technique of FIG. 4B, the porous films 122 may be vertically arranged, and the slurries may be positioned between the blade 176 and the corresponding porous film 122 to apply the slurries to the porous films 122. The opposing side of the slurries may be contacted to the mesh substrate 102 to form the double-sided coating 100. The solvent from the slurries may be evaporated through the porous films 122.

The non-limiting example in FIG. 4C shows a double-sided coating 100 using a solid substrate 103. In FIG. 4C the porous films 122 may be vertically arranged, and the slurries may be applied by application means 182 to the corresponding porous films 122 to apply the slurries to the porous films 122. The opposing side of the slurries may be contacted to the solid substrate 103 to form the double-sided coating 100. The porous films 122 may be unwound from a film spool 184 and subsequently applied to the slurries at the rollers 172. Vertically arranging the substrate 102, 103 may enable the use of a relatively thinner substrate 102, 103 (compared to a horizontally arranged substrate 102, 103), reducing the risk of sagging or tearing the substrate 102, 103.

### EXAMPLES

The following examples are presented to demonstrate the general principles of the invention. The invention should not be considered as limited to the specific examples presented.

Coatings for Examples 1-12 were prepared as follows:
90 g of slurry having the following components were added to a container. The components were mixed in a Thinky mixer (model ARE-310) at 2000 rpm for 8 minutes, deform at 2200 rpm for 2 minutes. The slurry components are as follows:
1. Solid content for the slurry: 18 wt% for Examples 1-10 and 31 wt% solids for Examples 11-12;
2. Composition of liquid media for the slurry: water 97 wt%, solvent 3 wt% for Examples 1-10; 100 wt% water for Examples 11-12;
3. Composition of solid part of the slurry: carbon/sulfur composite 80 wt% (sulfur is an electrochemical active element of the composite; carbon is an inactive material that hosts the sulfur; carbon sulfur weight ratio is 36:64), conductive carbon 10 wt%, binder 10 wt%;
4. Binder: Examples 1-6 and 11-12 all CMC binder; Example 7, CMC:PTFE=8:1; Example 8, CMC:PTFE=2:1; Examples 9-10, CMC:PTFE=1:1.

The coatings formed as described above were used as coatings as follows:
A PET film was put onto a sheet film coater (MTI, MSK-AFA-II-VC), and a drawdown bar was put on the PET film. The sheet film coater was set at a speed setting of 7 and the 1^{st} drawdown bar blade gap listed in Tables 1 and 2 below and at different sulfur loading areal densities. The slurry was loaded next to the drawdown blade and the coater was run to coat slurry on the PET film. A piece of mesh substrate listed in Tables 1 and 2 were placed on the slurry. The mesh substrate was narrower than the doctor blade so the drawdown bar feet do not touch the mesh. The doctor blade gap was then set at the 2^{nd} drawdown bar blade gap listed in Tables 1 and 2. A second layer of slurry was applied over the mesh by running the coater at the same speed as previously described to coat the mesh. A porous separator (CELGARD 2500 (Celgard, LLC (Charlotte, NC))) was applied to the top of the second layer of slurry. The coatings were allowed to dry at room temperature overnight. After drying, the bottom PET film and porous separator were peeled so as to leave a smooth, thick double-sided coating over the mesh.

The sulfur areal density from Tables 1 and 2 was determined by measuring the coating weight and surface area of the coating. Total areal density can be determined therefrom by dividing sulfur areal density by total weight percent of sulfur (0.5175 in these Examples). Ra was determined using a ZYGO NewView 600 interferometer.

**Table 1**

| **Example** | **1^{st} Draw Down Gap** | **2^{nd} draw down gap** | **Mesh Substrate** | **S Areal density of one side (mg-S/cm²)** | **Coating Thickness (µm)** | **Ra (µm)** |
|---|---|---|---|---|---|---|
| **1** | 900µm | 1300µm | Laser Drill Al Foil (15µm thick, hole d=0.2mm, 50% porosity) | 15.5 | 370 | 0.0326 |
| **2** | 900µm | 1300µm | Laser Drill Al Foil (15µm thick, hole d=0.4mm, 50% porosity) | 15.5 | 370 | 0.0373 |
| **3** | 550µm | 900µm | Aluminum 200 mesh | 4 | 97 | 0.1310 |
| **4** | 900µm | 1300µm | Aluminum 200 mesh | 7 | 169 | 0.1330 |
| **5** | 700µm | 1100µm | Stainless Steel 500 mesh | 5.3 | 128 | 0.0196 |
| **6** | 900µm | 1300µm | Stainless Steel 500 mesh | 7.2 | 174 | 0.0887 |

**Table 2**

| **Example** | **1^{st} Draw Down Gap** | **2^{nd} Draw Down Gap** | **Mesh Substrate** | **S Areal density of one side (mg-S/cm²)** | **Coati ng Thick ness (µm)** | **Ra (µm)** |
|---|---|---|---|---|---|---|
| **7** | 550µm | 900µm | Aluminum 200 mesh | 4.4 | 106 | 0.146 5 |
| **8** | 550µm | 900µm | Aluminum 200 mesh | 5.1 | 123 | 0.158 0 |
| **9** | 500µm | 900µm | Aluminum 200 mesh | 4 | 97 | 0.136 9 |
| **10** | 450µm | 900µm | Aluminum 200 mesh | 4.3 | 104 | 0.157 3 |
| **11** | 350µm | 700µm | Aluminum 200 mesh | 4.5 | 109 | 0.057 8 |
| **12** | 500µm | 900µm | Aluminum 200 mesh | 6.5 | 157 | 0.083 3 |

The coatings of Examples 1-12 were smooth coatings (based on Ra) with high loading levels.

Although the disclosed subject matter has been described in detail for the purpose of illustration based on what is currently considered to be the most practical and preferred embodiments or aspects, it is to be understood that such detail is solely for that purpose and that the disclosed subject matter is not limited to the disclosed embodiments or aspects, but, on the contrary, is intended to cover modifications and equivalent arrangements that are within the spirit and scope of the appended claims. For example, it is to be understood that the presently disclosed subject matter contemplates that, to the extent possible, one or more features of any embodiment or aspect can be combined with one or more features of any other embodiment or aspect.

## Claims

1. A double-sided coating, comprising:
a substrate having a first side and an opposing second side;
a first coating forming a first electrode arranged on the first side; and
a second coating forming a second electrode arranged on the second side,
wherein each of the first coating and the second coating have a thickness of at least 30 µm and a surface roughness (Ra) of less than 10 µm and are formed from a slurry comprising a liquid carrier suspending solid particles, wherein the slurry comprises a binder, an active material, and a conductive material.

2. The double-sided coating of claim 1, further comprising at least one first film arranged on the first coating and at least one second film arranged on the second coating, wherein at least one of the at least one first film and the at least one second film is porous;
optionally wherein an adhesion between the at least one first film and the first coating is less than an adhesion between the first coating and the first side of the substrate and/or an adhesion between the at least one second film and the second coating is less than an adhesion between the second coating and the second side of the substrate.

3. The double-sided coating of any preceding claim, wherein the active material comprises an electroactive material.

4. The double-sided coating of any preceding claim, wherein the conductive material comprises conductive carbon.

5. The double-sided coating of any preceding claim, wherein the substrate comprises a metal mesh and/or a solid foil and/or wherein the substrate comprises pores.

6. The double-sided coating of any preceding claim, wherein the first electrode and/or the second electrode comprises a cathode.

7. The double-sided coating of any preceding claim, wherein the first coating and/or the second coating has a porosity of from 20%-90%.

8. The double-sided coating of any preceding claim, arranged as a component of a secondary battery and/or a lithium-Chalcogen battery.

9. A method of forming a double-sided coating, comprising:
arranging a first slurry on a first side of a substrate and a second slurry on a second side of the substrate, wherein the first slurry comprises a liquid carrier suspending first solid particles, wherein the first slurry comprises a first binder, a first active material, and a first conductive material, wherein the second slurry comprises a liquid carrier suspending second solid particles, wherein the second slurry comprises a second binder, a second active material, and a second conductive material;
contacting at least one first film on the first slurry and at least one second film on the second slurry, wherein at least one of the at least one first film and the at least one second film is porous; and
evaporating at least a portion of the liquid carrier of the first slurry and second slurry to form a respective first coating forming a first electrode and second coating forming a second electrode,
wherein the first coating and the second coating each have a thickness of at least 30 µm and a surface roughness (Ra) of less than 10 µm.

10. The method of claim 9, further comprising:
removing the at least one first film from the first coating without removing the first coating from the first side of the substrate; and/or
removing the at least one second film from the second coating without removing the second coating from the second side of the substrate.

11. The method of claim 9 or claim 10, wherein the evaporating occurs at ambient temperature.

12. The method of any of claims 9 to 11, wherein:
the first slurry is applied to the at least one first film;
the first side of the substrate is contacted with the first slurry;
the second slurry is applied to the second side of the substrate; and
the at least one second film is contacted with the second slurry.
optionally wherein the at least one first film is porous or non-porous, and the at least one second film is porous.

13. The method of any of claims 9 to 12, wherein:
the first and second slurries are applied to the first and second sides of the substrate, respectively; and
the at least one first and second films are contacted with the first and second slurries, respectively.

14. The method of any of claims 9 to 13, wherein the at least one first film and the at least one second film are porous.

15. The method of any of claims 9 to 14, wherein an adhesion between the at least one first film and the first coating is less than an adhesion between the first coating and the first side of the substrate and/or an adhesion between the at least one second film and the second coating is less than an adhesion between the second coating and the second side of the substrate.

16. An electrochemical device comprising the double-sided coating of any of claims 1 to 8, optionally wherein the electrochemical device comprises a battery, a capacitor, an electrochemical sensor, or a fuel cell.

17. The electrochemical device of claim 16, wherein the first coating and the second coating form a first cathode and a second cathode, respectively, of the electrochemical device and optionally further comprising:
a first separator comprising a first electrolyte, wherein a first end of the first separator is connected to the first cathode;
a first anode connected to a second end of the first separator;
a second separator comprising a second electrolyte, wherein a first end of the second separator is connected to the second cathode; and
a second anode connected to a second end of the second separator.

18. The electrochemical device of claim 16 or claim 17, wherein the electrochemical device comprises a secondary battery and/or a lithium-Chalcogen battery.
